# EUROPÄISCHE PATENTSCHRIFT

(11) **EP 0 661 296 B1**
(45) Veröffentlichungstag und Bekanntmachung des Hinweises auf die Patenterteilung: **29.12.1997**
(21) Anmeldenummer: 94117055.7
(22) Anmeldetag: 28.10.1994
(51) Int. Cl.: C08C 1/07

(54) **Wässrige, hochkonzentrierte Synthesekautschukdispersion und ihre Herstellung**
Aqueous, highly concentrated dispersion of synthetic rubber and its preparation
Dispersion aqueuse de caoutchouc synthétique très concentrée et sa préparation

(30) Priorität: 30.12.1993 DE 4344992
(43) Veröffentlichungstag der Anmeldung: 05.07.1995
(73) Patentinhaber: POLYMER LATEX GmbH & Co. KG, 45764 Marl (DE)
(72) Erfinder: Sauer, Thomas, Dr., D-45721 Haltern (DE)

(56) Entgegenhaltungen:
- EP-A- 0 433 710
- EP-A- 0 517 539
- DD-A- 137 718
- DE-A- 2 645 082
- FR-A- 2 235 966
- US-A- 3 330 795

## Beschreibung

Hochkonzentrierte ("High Solid"), wäßrige Synthesekautschukdispersionen haben eine große technische Bedeutung für die Herstellung von Schaumformartikeln und geschäumten Teppichrücken. Es ist bekannt, daß die Latexteilchen in solchen Latices relativ groß und deren Größenverteilungen relativ breit sein müssen, um einen hohen Feststoffgehalt bei niedriger Viskosität zu erhalten. Die Herstellung von z. B. hochkonzentrierten, wäßrigen Styrol-Butadien-Dispersionen mit einem Feststoffgehalt bis zu 70 Gew.-% direkt durch Emulsionspolymerisation ist daher nicht möglich, da bei den gängigen technischen Verfahren durchweg feinteilige Dispersionen erhalten werden. Aufgrund der geringen Teilchengröße steigt jedoch die Viskosität der Dispersion bei hohem Feststoffgehalt sehr stark an. Die Herstellung grobteiliger Dispersionen ist zwar bekannt (siehe z. B. DE 21 65 410) ist aber bei Styrol-Butadien-Dispersionen technisch nicht von Interesse. Mit steigender Partikelgröße und damit abnehmender Partikelkonzentrationen fällt bei gleichem Phasenverhältnis die Polymerisationsgeschwindigkeit stark ab, und das Verfahren wird aufgrund extrem langer Reaktionszeiten unwirtschaftlich.

Daher werden gewöhnlich feinteilige Synthesekautschukdispersionen mit relativ geringem Feststoffanteil hergestellt und anschließend durch Agglomeration in grobteilige Synthesekautschukdispersionen mit breiter Verteilung der Teilchengrößen überführt. Durch anschließendes Entfernen von Wasser werden dann hochkonzentrierte Synthesekautschukdispersionen erhalten. Bekannte Verfahren zur Agglomeration sind die Druck- und Gefrieragglomeration. Dabei wird durch Anwendung von erhöhtem Druck bzw. durch teilweises Einfrieren der Synthesekautschukdispersionen eine partielle kolloidale Instabilität erzeugt, die zu einer Zusammenlagerung von Latexpartikeln führt. Dadurch wird die Viskosität der SynthesekautschuKdispersion bei hohen Feststoffgehalten deutlich verringert. Beide Verfahren sind technisch sehr aufwendig und erzeugen daher hohe Kosten. Als weiteres Verfahren ist die chemische Agglomeration bekannt, bei der der feinteiligen Synthesekautschukdispersion ein Agglomerationsmittel zugefügt wird, das spontan einen kontrollierten Agglomerationsprozeß einleitet. Ein solches Verfahren ist beispielsweise in DE 26 45 082 und US 3 330 795 beschrieben. Dabei werden oxidierte Polyethylenoxide als Agglomerationsmittel eingesetzt. Das Verfahren führt zur Agglomeration von feinteiligen Synthesekautschukdispersionen zu Latices mit sehr breiter Verteilung der Teilchengrößen und einem zahlenmittleren Partikeldurchmesser von 0,2 bis 2 µm. Solche Synthesekautschukdispersionen lassen sich bis zu Feststoffgehalten von 65 bis 70 Gew.-% bei einem für die Anwendung akzeptablen Viskositätsniveau von 1 000 bis 3 000 mPa·s nach Brookfield aufkonzentrieren.

Es wurde nun überraschenderweise gefunden, daß wasserlösliche oder wasserdispergierbare Copolymere bestehend aus einem oder mehreren hydrophoben, im wesentlichen wasserunlöslichen Monomeren und einem oder mehreren hydrophilen, wasserlöslichen und salzbildenden Sulfonsäure-Monomeren vorteilhaft als Agglomerationsmittel für die chemische Agglomeration von feinteiligen Synthesekautschukdispersionen eingesetzt werden können.

Gegenstand der Erfindung ist daher ein neues Verfahren zur Agglomeration von feinteiligen Synthesekautschukdispersionen sowie die Herstellung von hockkonzentrierten Synthesekautschukdispersionen. Sie bezieht sich ebenfalls auf die Herstellung von Latexschäumen aus den erfindungsgemäß hergestellten Synthesekautschukdispersionen.

Die Herstellung von feinteiligen, wäßrigen Synthesekautschukdispersionen nach dem Verfahren der Emulsionspolymerisation ist nach dem Stand der Technik bekannt. Ein solches Verfahren wird beispielsweise in DE 26 45 082 beschrieben.

Die erfindungsgemäßen wasserlöslichen oder wasserdispergierbaren Copolymere bestehen aus mindestens einem hydrophoben, im wesentlichen wasserunlöslichen Monomer. Im wesentlichen wasserunlöslich bedeutet dabei, daß die Löslichkeit dieser Monomere in Wasser bei 25 °C weniger als 3 Gewichtsprozent beträgt. Desweiteren bestehen die erfindungsgemäßen Copolymere aus mindestens einem hydrophilen, wasserlöslichen und salzbildenden Sulfonsäure-Monomer. Wasserlöslich bedeutet dabei, daß die Löslichkeit dieser Monomere bzw. deren Metall- oder Ammoniumsalze in Wasser bei 25 °C mindestens 10 Gewichtsprozent beträgt.

Als hydrophobe Monomere können lineare oder verzweigte Alkylester der Acryl- und Methacrylsäure mit 1 bis 18 Kohlenstoffatomen in der Alkylkette, Vinylester mit 1 bis 12 Kohlenstoffatomen in der Säurekomponente, vinylaromatische Monomere wie Styrol, α-Methylstyrol oder Vinyltoluol sowie olefinisch ungesättigte Diene wie Butadien und Isopren eingesetzt werden. Bevorzugte hydrophobe Monomere sind lineare oder verzweigte Alkylester der Acryl- und Methacrylsäure mit 1 bis 8 Kohlenstoffatomen in der Alkylkette sowie Styrol. Besonders bevorzugte hydrophobe Monomere sind Methylmethacrylat, Butylacrylat und Styrol.

Als hydrophile, wasserlösliche und salzbildende Monomere können olefinisch ungesättigte Sulfonsäuren bzw. deren Metall- und Ammoniumsalze eingesetzt werden. Dazu eignen sich sulfonsäurehaltige Derivate der (Meth-)Acrylsäure wie Sulfoalkyl(meth)acrylate mit 1 bis 8 Kohlenstoffatomen in der Alkylkette, vinylaromatische Sulfonsäuren wie Styrolsulfonsäure, Vinylsulfonsäure und (Meth-)Allylsulfonsäure bzw. deren Metalloder Ammoniumsalze. Bevorzugte hydrophile Monomere sind Sulfoethyl- und Sulfopropyl(meth-) acrylat, Styrolsulfonsäure bzw. deren Metall- und Ammoniumsalze. Bevorzugte Metallsalze sind insbesondere die Natrium- und Kaliumsalze.

Die erfindungsgemäßen Copolymere enthalten 10 bis 90 Gew.-% hydrophobe Monomere und 90 bis 10 Gew.-% hydrophile Sulfonsäure-Monomere. In einer bevorzugten Ausführungsform enthalten die Copolymere 30 bis 70 Gew.-% hydrophobe Monomere und 70 bis 30 Gew.-% hydrophile Sulfonsäure-Monomere.

Als hydrophobes Monomer kann ein einzelnes der oben angeführten hydrophoben Monomere oder auch eine Mischung aus mehreren eingesetzt werden. Ebenso kann als hydrophiles Monomer eines oder ein Gemisch der oben angeführten hydrophilen Sulfonsäure-Monomere eingesetzt werden.

Die Herstellung der erfindungsgemäßen Copolymere erfolgt mittels Verfahren der radikalischen Polymerisation, die dem Fachmann geläufig sind. Vorzugsweise wird in Wasser als Lösungs- bzw. Dispergiermittel polymerisiert. Die Monomeren werden dabei vorzugsweise in einem semikontinuierlichen Zulaufverfahren zugegeben. Der radikalische Initiator, vorzugsweise ein wasserlösliches Peroxodisulfat wie Natrium- oder Ammoniumperoxodisulfat, kann vorgelegt oder semikontinuierlich zudosiert werden. Bei der Polymerisation werden vorzugsweise keine weiteren Lösungs- und Dispergiermittel eingesetzt.

Die erfindungsgemäßen Copolymere haben ein mittleres Molekulargewicht zwischen 1 000 und 100 000 g/mol, vorzugsweise zwischen 5 000 und 20 000 g/mol. Die Einstellung des gewünschten Molekulargewichts bei der Polymerisation kann durch Zugabe eines wasserlöslichen Molekulargewichtsreglers geschehen.

Zur Agglomeration der feinteiligen Synthesekautschukdispersion wird diese unter Rühren auf Temperaturen von 20 bis 80 °C erhitzt, vorzugsweise auf 40 bis 60 °C. Das Agglomerationsmittel wird als verdünnte wäßrige Lösung oder Dispersion zugegeben. Die Konzentration der Agglomeratorlösung oder -dispersion beträgt zwischen 1 und 20 Gew.-%, vorzugsweise zwischen 2 und 10 Gew.-%. Die zur Synthesekautschukdispersion zugegebene Menge an Agglomerationsmittel liegt zwischen 0,1 und 5 Gew.-% wasserlösliches oder wasserdispergierbares Copolymer bezogen auf den Feststoffgehalt der wäßrigen Synthesekautschukdispersion. Besonders bevorzugt ist die Zugabe von 0,5 bis 1,5 Gew.-% Agglomerationsmittel.

Das Agglomerationsmittel wird der Synthesekautschukdispersion in einem Zuge, in mehreren Teilportionen oder semikontinuierlich im Zulauf zugegeben. Die bevorzugte Ausführungsform besteht in der einmaligen Zugabe des Agglomerationsmittels.

Desweiteren werden gleichzeitig mit dem Agglomerationsmittel weitere Hilfsmittel zur Agglomeration zugegeben. Insbesondere wird eine wäßrige Lösung eines Salzes gleichzeitig und in der gleichen Weise wie das Agglomerationsmittel zugegeben. Bevorzugt wird Kaliumchlorid eingesetzt. Das Salz wird als Lösung mit einer Konzentration von 5 bis 50 Gew.-%, bevorzugt mit einer Konzentration von 10 bis 20 Gew.-%, zugegeben. Die zugegebene Menge an Salz beträgt 0,1 bis 5 Gew.-% bezogen auf den Feststoff der Synthesekautschukdispersion, bevorzugt werden 0,5 bis 1,5 Gew.-% zugegeben.

Die Agglomeration tritt spontan bei der Zugabe des Agglomerationsmittels und des Salzes ein und führt zu einer starken Abnahme der Oberflächenspannung. Während die feinteilige Synthesekautschukdispersion eine relativ hohe Oberflächenspannung von 60 bis 70 mN/m hat, fällt diese während der Agglomeration auf Werte von 40 bis 55 mN/m ab. Der Agglomerationsprozeß ist beendet, wenn die Oberflächenspannung einen konstanten Endwert erreicht hat. Der Agglomerationsprozeß kann auch durch Zunahme des mittleren Durchmessers der Latexpartikel verfolgt werden. Die dazu geeigneten Meßverfahren sind dem Fachmann bekannt. Während der Agglomeration erfolgt ebenfalls ein starker Abfall der Latexviskosität.

Während oder nach der Agglomeration können weitere Hilfsstoffe wie Emulgatoren, Dispergatoren oder andere Hilfsmittel nach Bedarf zugegeben werden. Der Erfolg der Agglomeration hängt jedoch nicht von der Zugabe dieser weiteren Hilfsmittel ab.

Die durch diese Agglomeration erhaltene Synthesekautschukdispersion wird anschließend durch Entfernen von Wasser aufkonzentriert. Die dafür geeigneten Verfahren sind dem Fachmann bekannt. Dadurch wird ein Latex mit 60 bis 73 Gew.-% Feststoffgehalt, bevorzugt mit 66 bis 72 Gew.-%, mit einer Viskosität nach Brookfield von 1 000 bis 5 000 mPa·s, bevorzugt 1 500 bis 3 000 mPa·s, erhalten. Der Latex ist frei von feinteiligem Koagulat und grobteiligen Abscheidungen. Der zahlenmittlere Partikeldurchmesser liegt zwischen 2 uns 200 µm. Gegenüber dem in US 3 330 795 beschriebenen Verfahren zur chemischen Agglomeration (mittlerer Partikeldurchmesser nach Agglomeration zwischen 0,2 und 2 µm) können bei gleicher Latexviskosität um 2 bis 3 Gew.-% höhere Feststoffgehalte durch Aufkonzentrieren eingestellt werden. Da bei der Herstellung von Latexschäumen dadurch weniger Wasser verdunstet werden muß, entsteht ein Kostenvorteil. Die erfindungsgemäß hergestellten Synthesekautschukdispersionen sind lagerstabil und zeigen kein Absinken oder Aufschwimmen grobteiliger Partikel ("Aufrahmen").

Die erfindungsgemäßen, hochkonzentrierten Synthesekautschukdispersionen können zur Herstellung von Latexschäumen durch mechanisches Verschäumen der Latices mit Luft oder einem anderen Treibgas und anschließender Vulkanisation in der Wärme eingesetzt werden. Sie eignen sich gleichermaßen für alle gängigen Verfahren zur Latexschaumherstellung. Die so hergestellten Latexschäume können insbesondere zur Herstellung von geschäumten Teppichrücken sowie zur Herstellung von Latexmatratzen und sonstigen Schaumformteilen eingesetzt werden.

Bevorzugt werden als Synthesekautschukdispersionen Styrol-Butadien-Dispersionen eingesetzt, da diese mit dem erfindungsgemäßen Agglomerationsmittel hervorragende Ergebnisse liefern.

Die Erfindung wird durch die folgenden Beispiele noch weiter erläutert.

### Beispiele

### Beispiele 1 bis 6

### Herstellung von erfindungsgemäßen Agglomerationsmitteln

In einem Glaskolben mit Rückflußkühler, Rührer und Innenthermometer werden 100 g Wasser vorgelegt und auf 75 °C erhitzt. Das hydrophile Monomer wird als Lösung in 250 g Wasser gleichzeitig mit dem hydrophoben Monomer innerhalb von 2 Stunden kontinuierlich zudosiert. 1 g Natriumperoxodisulfat in 50 g Wasser werden innerhalb von 3 Stunden zudosiert. Nach Beendigung des Initiatorzulaufs wird noch 2 Stunden nachpolymerisiert. Die jeweils eingesetzten Monomermengen sind in folgender Tabelle angegeben.

| Beispiel | Hydrophiles Monomer (g) | Hydrophobes Monomer (g) | Aussehen |
|---|---|---|---|
| 1 | NaSS / 30 | MMA / 70 | Lösung |
| 2 | NaSS / 50 | MMA / 50 | Lösung |
| 3 | NaSS / 70 | MMA / 30 | Lösung |
| 4 | SPM / 50 | MMA / 50 | Lösung |
| 5 | NaSS / 50 | S / 50 | Dispersion |
| 6 | NaSS / 10 | | |
| | AS / 20 | MMA / 70 | trübe Lösung |
| MMA : Methylmethacrylat BA : n-Butylacrylat S : Styrol NaSS : Natriumstyrolsulfonat SPM : Kaliumsulfopropylmethacrylat NaMAS: Natriummethallylsulfonat AS : Acrylsäure | | | |

### Herstellungsbeispiel A

### Herstellung einer feinteiligen Synthesekautschukdispersion (nicht erfindungsgemäß)

Eine feinteilige Synthesekautschukdispersion mit einem Styrolgehalt von 25 und einem Butadiengehalt von 75 Gewichtsprozent wurde gemäß DE 26 45 082, Beispiel 1, hergestellt, jedoch ohne eine Agglomeration mit oxidiertem Polyethylenglykol durchzuführen. Der Latex hatte einen Feststoffgehalt von 38,8 Gew.-%, eine Viskosität von 204 mPa·s, eine Oberflächenspannung von 71,3 mN/m sowie einen volumenmittleren Partikeldurchmesser von 84 nm.

### Beispiele 7 bis 10

Die folgenden Beispiele zeigen den Einfluß der Mengen an Agglomerationsmittel und Elektrolyt auf die Agglomeration von Synthesekautschukdispersionen.

Die Dispersion gemäß Herstellungsbeispiel A wird in einem Kolben unter Rühren auf 50 °C erhitzt. Danach werden eine 10 %ige Kaliumchloridlösung sowie eine 1,75 %ige Lösung des Agglomerationsmittels nach Beispiel 1 zugegeben. Der Verlauf der Agglomeration wird durch Messen der Oberflächenspannung verfolgt. Die eingesetzten Mengen (in Gewichts-% bezogen auf den Feststoffgehalt der Dispersion) sowie die Oberflächenspannungen nach Ende des Versuchs sind in der folgenden Tabelle wiedergegeben. Die Agglomeration ist erfolgreich verlaufen, wenn die Oberflächenspannung innerhalb von 90 Minuten um mindestens 15 Einheiten abfällt.

| Beispiel | Agglomerationsmittel (Gew.%) | KCl (Gew.-%) | Oberflächenspannung (mN/m) |
|---|---|---|---|
| 7 | 0,6 | 0,0 | 67,9 |
| 8 | 0,6 | 0,8 | 46,3 |
| 9 | 0,1 | 0,8 | 68,9 |
| 10 | 1,0 | 0,8 | 44,3 |

### Beispiele 11 bis 13

Die folgenden Besipiele zeigen den Einsatz von verschiedenen Agglomerationsmitteln.

Die Agglomeration wird gemäß dem vorangehenden Verfahren (Beispiele 7 bis 10) durchgeführt. Art und eingesetzte Mengen (in Gewichts-% bezogen auf den Feststoffgehalt der Dispersion) von Agglomerationsmitteln sowie die Oberflächenspannungen nach Ende des Versuchs sind in der folgenden Tabelle wiedergegeben.

| Beispiel | Agglomerationsmittel (gemäß Beispiel Nr. / Gew.-%) | KCl (Gew.-%) | Oberflächenspannung (mN/m) |
|---|---|---|---|
| 11 | 1 / 0,6 | 0,8 | 46,3 |
| 12 | 2 / 0,6 | 0,8 | 56,2 |
| 13 | 4 / 0,6 | 0,8 | 54,6 |

## Patentansprüche

1. Verfahren zur chemischen Agglomeration von feinteiligen, wäßrigen Synthesekautschukdispersionen mit Hilfe von wasserlöslichen oder wasserdispergierbaren Copolymeren als Agglomerationsmittel,
dadurch gekennzeichnet,
daß das wasserlösliche oder wasserdispergierbare Copolymere aus 10 bis 90 Gew.-% eines oder mehreren hydrophoben, im wesentlichen wasserunlöslichen, olefinisch ungesättigten Monomeren und 90 bis 10 Gew.-% aus einem oder mehreren hydrophilen, wasserlöslichen und salzbildenden, olefinisch ungesättigten Sulfonsäure-Monomeren besteht.

2. Verfahren gemäß Anspruch 1,
dadurch gekennzeichnet,
daß das wasserlösliche oder wasserdispergierbare Copolymere aus 30 bis 70 Gew.-% eines oder mehreren hydrophoben, im wesentlichen wasserunlöslichen, olefinisch ungesättigten Monomeren und 70 bis 30 Gew.-% aus einem oder mehreren hydrophilen, wasserlöslichen und salzbildenden, olefinisch ungesättigten Sulfonsäure-Monomeren besteht.

3. Verfahren gemäß den Ansprüchen 1 bis 2,
dadurch gekennzeichnet,
daß das Copolymere eine mittlere molare Masse von 5 000 bis 20 000 g/mol hat.

4. Verfahren gemäß den Ansprüchen 1 bis 3,
dadurch gekennzeichnet,
daß das hydrophobe, im wesentlichen wasserunlösliche Comonomere ein Alkyl(meth)acrylat mit 1 bis 8 Kohlenstoffatome in der Alkylkette und/oder Styrol ist.

5. Verfahren gemäß den Ansprüchen 1 bis 4,
dadurch gekennzeichnet,
daß das Agglomerationsmittel als wäßrige Lösung oder Dispersion mit einem Anteil von 0,5 bis 1,5 Gew.-% Copolymer bezogen auf den Feststoffgehalt der zu agglomerierenden, feinteiligen Synthesekautschukdispersion zugegeben wird.

6. Verfahren gemäß Anspruch 5,
dadurch gekennzeichnet,
daß gleichzeitig mit dem Agglomerationsmittel eine wäßrige Salzlösung mit einem Anteil von 0,5 bis 1,5 Gew.-% Salz bezogen auf den Feststoffgehalt der zu agglomerierenden, feinteiligen Synthesekautschukdispersion zugegeben wird.

7. Verfahren gemäß den Ansprüchen 1 bis 6,
dadurch gekennzeichnet,
daß die Synthesekautschukdispersion eine Styrol-Butadien-Dispersion darstellt.

8. Wäßrige, hochkonzentrierte Synthesekautschukdispersionen mit einem Feststoffgehalt von 66 bis 72 Gew.-%, die durch Agglomeration nach einem Verfahren gemäß den Ansprüchen 1 bis 7 und anschließendes Aufkonzentrieren erhalten worden ist.

9. Wäßrige, hochkonzentrierte Synthesekautschukdispersion gemäß Anspruch 8,
dadurch gekennzeichnet,
daß der mittlere Partikeldurchmesser 2 bis 200 µm bei gleichzeitig sehr breiter Partikelgrößenverteilung beträgt.

10. Wäßrige, hochkonzentrierte Synthesekautschukdispersion gemäß den Ansprüchen 8 und 9,
dadurch gekennzeichnet,
daß die Synthesekautschukdispersion eine Styrol-Butadien-Dispersion darstellt.

11. Verwendung der Synthesekautschukdispersionen gemäß den Ansprüchen 8 bis 10 zur Herstellung von Latexschäumen und Latexschaumartikeln, insbesondere zur Herstellung von geschäumten Teppichrücken, von Latexmatratzen und sonstigen Schaumformteilen.

## Claims

1. A process for the chemical agglomeration of finely divided, aqueous synthetic rubber emulsions with the aid of water-soluble or water-dispersible copolymers as agglomerating agents, characterized in that the water-soluble or water-dispersible copolymer consists of 10 to 90% by weight of one or more hydrophobic, essentially water-insoluble, olefinically unsaturated monomers and 90 to 10% by weight of one or more hydrophilic, water-soluble and salt-forming, olefinically unsaturated sulphonic acid monomers.

2. A process according to claim 1, characterized in that the water-soluble or water-dispersible copolymer consists of 30 to 70% by weight of one or more hydrophobic, essentially water-insoluble, olefinically unsaturated monomers and 70 to 30% by weight of one or more hydrophilic, water-soluble and salt-forming, olefinically unsaturated sulphonic acid monomers.

3. A process according to either of claims 1 and 2, characterized in that the copolymer has an average molecular weight of 5,000 to 20,000 g/mol.

4. A process according to any of claims 1 to 3, characterized in that the hydrophobic, essentially water-insoluble comonomer is an alkyl (meth)acrylate having 1 to 8 carbon atoms in the alkyl chain and/or styrene.

5. A process according to any of claims 1 to 4, characterized in that the agglomerating agent is added in the form of an aqueous solution or emulsion containing 0.5 to 1.5% by weight of copolymer, based on the solids content of the finely divided synthetic rubber emulsion to be agglomerated.

6. A process according to claim 5, characterized in that an aqueous salt solution containing 0.5 to 1.5% by weight of salt, based on the solids content of the finely divided synthetic rubber emulsion to be agglomerated, is added simultaneously with the agglomerating agent.

7. A process according to any of claims 1 to 6, characterized in that the synthetic rubber emulsion is a styrene/butadiene emulsion.

8. An aqueous, high-solid synthetic rubber emulsion having a solids content of 66 to 72% by weight, which has been obtained by agglomeration by a process according to any of claims 1 to 7 and subsequent concentration.

9. An aqueous, high-solid synthetic rubber emulsion according to claim 8, characterized in that the mean particle diameter is 2 to 200 µm in conjunction with a very broad particle size distribution.

10. An aqueous, high-solid synthetic rubber emulsion according to either of claims 8 and 9, characterized in that the synthetic rubber emulsion is a styrene/butadiene emulsion.

11. Use of the synthetic rubber emulsions according to any of claims 8 to 10 for the production of latex foams and foamed latex articles, in particular for the production of foamed carpet backings, of latex mattresses and of other shaped foam articles.

## Revendications

1. Procédé d'agglomération chimique de dispersions de caoutchouc de synthèse aqueuses finement divisées à l'aide de copolymères solubles dans l'eau ou dispersables dans l'eau comme agents agglomérants,
caractérisé en ce que
le copolymère soluble dans l'eau ou dispersable dans l'eau se compose de 10 à 90 % en poids d'un ou plusieurs monomères oléfiniquement insaturés hydrophobes, essentiellement insolubles dans l'eau, et de 90 à 10 % en poids d'un ou plusieurs monomères d'acide sulfonique oléfiniquement insaturés hydrophiles, solubles dans l'eau et salifiables.

2. Procédé selon la revendication 1,
caractérisé en ce que
le copolymère soluble dans l'eau ou dispersable dans l'eau se compose de 30 à 70 % en poids d'un ou plusieurs monomères oléfiniquement insaturés hydrophobes, essentiellement insolubles dans l'eau, et de 70 à 30 % en poids d'un ou plusieurs monomères d'acide sulfonique oléfiniquement insaturés hydrophiles, solubles dans l'eau et salifiables.

3. Procédé selon les revendications 1 à 2,
caractérisé en ce que
le copolymère a une masse molaire moyenne de 5000 à 20 000 g/mol.

4. Procédé selon les revendications 1 à 3, caractérisé en ce que
le comonomère hydrophobe essentiellement insoluble dans l'eau est un (méth)acrylate d'alkyle comportant de 1 à 8 atomes de carbone dans la chaîne alkyle et/ou styrène.

5. Procédé selon les revendications 1 à 4,
caractérisé en ce qu'
on ajoute l'agent d'agglomération sous forme de solution ou de dispersion aqueuse avec une proportion de 0,5 à 1,5 % en poids de copolymère par rapport à la teneur en corps solide de la dispersion de caoutchouc de synthèse finement divisée à agglomérer.

6. Procédé selon la revendication 5,
caractérisé en ce qu'
en même temps que l'agent agglomérant on ajoute une solution aqueuse de sel en une proportion de 0,5 à 1,5% en poids de sel par rapport à la teneur en corps solide de la dispersion de caoutchouc de synthèse en particules fines à agglomérer.

7. Procédé selon les revendications 1 à 6,
caractérisé en ce que
la dispersion de caoutchouc de synthèse représente une dispersion de styrène-butadiène.

8. Dispersions aqueuses très concentrées de caoutchouc de synthèse ayant une teneur en corps solide de 66 à 72 % en poids, que l'on a obtenu par agglomération selon un procédé de l'une des revendications 1 à 7 puis par concentration.

9. Dispersion aqueuse très concentrée de caoutchouc de synthèse selon la revendication 8,
caractérisée en ce que
le diamètre particulaire moyen s'élève à 2 à 200 µm avec simultanément une très large répartition de taille particulaire.

10. Dispersion aqueuse très concentrée de caoutchouc de synthèse selon les revendications 8 et 9,
caractérisée en ce que
la dispersion de caoutchouc de synthèse représente une dispersion de styrène-butadiène.

11. Utilisation des dispersions de caoutchouc de synthèse selon les revendications 8 à 10 pour la fabrication de mousses de latex et d'articles de mousse de latex, en particulier pour la fabrication de dessous de tapis en mousse, de matelas en latex et d'autres pièces profilées en mousse.
